# EUROPEAN PATENT SPECIFICATION

(11) **EP 2 075 181 B1**
(45) Date of publication and mention of the grant of the patent: **30.11.2016**
(21) Application number: 08022407.4
(22) Date of filing: 23.12.2008
(51) Int. Cl.: B62J 37/00, B62M 7/02, B62J 17/02

(54) **Saddle type vehicle**
Motorrad
Véhicule à selle

(30) Priority: 26.12.2007 JP 2007334783; 26.12.2007 JP 2007334868
(43) Date of publication of application: 01.07.2009
(73) Proprietor: Yamaha Hatsudoki Kabushiki Kaisha, Shizuoka-ken Shizuoka 438-8501 (JP)
(72) Inventor: Masaki, Torigoshi, Iwata-shi Shizuoka-ken 438-8501 (JP); Oku, Yuji, Iwata-shi Shizuoka-ken 438-8501 (JP)
(74) Representative: Grünecker Patent- und Rechtsanwälte PartG mbB

(56) References cited:
- WO-A2-2005/111395
- DE-U1- 8 203 636
- JP-A- 5 187 236
- JP-A- 57 079 215
- JP-A- 57 102 519

## Description

### BACKGROUND OF THE INVENTION

### Field of the Invention

The present invention relates to a saddle type vehicle, more particularly to a saddle type vehicle including an intercooler.

### Description of the Related Art

In a two-wheeled motor vehicle (a saddle type vehicle) with a turbocharger, an intercooler may be disposed
(1) below the radiator on the front (in the forward part) of the two-wheeled motor vehicle;
(2) on the side of the radiator;
(3) on the side of the engine; or
(4) in front of the radiator (i.e. the coolers and the like are aligned with each other).

Document 1, specified below, discloses a technique for disposing an intercooler inside the main frame.

Further, a two-wheeled motor vehicle (a saddle type vehicle) with an engine having in general two to four cylinders, where the crankshaft is generally perpendicular to the direction of travel of the vehicle, is known.

A turbocharger may be mounted in front of the cylinder head or the cylinder body of a two-wheeled motor vehicle. In this case, the turbocharger is mounted in such a way that the axis of rotation for the turbocharger (i.e. the axis of rotation of the turbine and the compressor) is generally parallel to the crankshaft of the engine (i.e. generally perpendicular to the direction of travel of the vehicle).

Also, a turbocharger may be mounted in the front of the vehicle below the crankcase. In this case, too, the turbocharger is mounted in such a way that the axis of rotation of the turbocharger is generally parallel to the crankshaft.

Document 2, specified below, describes a marine diesel engine with a supercharger mounted on one end face of the cylinder block, as viewed along the length of the crankshaft, and an intercooler mounted on the other end face thereof.

Document 3 describes a coolant tank disposed on one end face of the cylinder head, and a turbocharger and an intercooler disposed on the opposite side of the cylinder head to the coolant tank.

Documents 4 to 6 each disclose a two-wheeled motor vehicle with a turbocharger disposed behind the engine.

Documents 7 and 8 each disclose a two-wheeled motor vehicle with a turbocharger disposed in front of the engine.

Document 9 shows a body cover for a motorcycle with channels provided in the body cover on both sides of the vehicle.

Document 10 discloses a saddle type vehicle according to the preamble of claim 1, having an engine with a two stage supercharging system where a high- pressure supercharger is located on one of the right and left sides of the top of the engine and an intercooler is located on the other. A low-pressure supercharger is located on the front of the top of the engine and an aftercooler is located on the rear.
[Document 1] JP 2003-127965 A
[Document 2] JP 2601714 B1
[Document 3] JP 2676252 B1
[Document 4] JP 2-33868 B2
[Document 5] JP 63-45355 B2
[Document 6] JP 1-27915 B2
[Document 7] JP 61-50808 B2
[Document 8] JP 64-3713 B2
[Document 9] DE 82 3 636 U1
[Document 10] JP 57 102519 A

Disposing an intercooler below the radiator, as in (1) above, has the problem that the intercooler does not receive much wind generated while the vehicle is running due to the presence of the front wheel.

Further, the resulting increase in the length of the intake pipe means increased turbo lag. Moreover, the surface area of the front of a two-wheeled motor vehicle is limited, which means tight design constraints on the disposition of the radiator, the air-cooling intercooler, and the air-cooling fuel cooler in front of the engine.

Particularly, the performance of the intercooler affects the engine performance (maximum torque, maximum output), so that increased size and efficiency of the intercooler is crucial in increasing the output of the engine. Tight design constraints may make that impossible.

If an intercooler is disposed on the side of the radiator or the engine, as in (2) or (3) above, it is likely to be damaged when the vehicle falls over.

Disposing large coolers or the like in line in front of the engine, as in (4) above, results in decreased cooling efficiency of each of the coolers. Prolonged wheel base also results. Prolonged wheel base means reduced motion performance of the vehicle body: The balancing between the engine performance and the body motion performance is difficult.

Disposing an intercooler inside the main frame, as in Document 1 above, allows only a relatively small intercooler to be disposed, leading to limited ability to cool intake air.

On the other hand, a two-wheeled motor vehicle with a turbocharger according to the conventional art had problems regarding (1) the response of the throttle, (2) the mounting location of the turbocharger, (3) maneuverability, and (4) durability. These problems will be elaborated on below.

### (1) Problem regarding the response of the throttle

Mounting a turbocharger according to the conventional art results in prolonged exhaust passageway between the exhaust ports of the engine and the turbocharger, in which case, for an air-cooled gasoline engine, a time lag between the initiation of opening of the throttle and the initiation of supercharging by the turbo is a factor of concern. This also applies to water-cooled engines and diesel engines.

### (2) Problem regarding the mounting location of the turbocharger

A two-wheeled motor vehicle incorporating a water-cooled diesel engine needs to incorporate a radiator, an intercooler and an oil cooler, restraining location of the turbocharger.

If the turbocharger is mounted in front of the cylinder head or the cylinder body with its axis generally parallel to the crankshaft, it may interfere with a radiator that is mounted between the front wheel and the cylinder head, so that only one of the two can be mounted. Cramming both of them would result in an excessively long wheel base. Also, in terms of weight distribution between the front and the rear, the front would be too light.

This is also the case when a turbocharger is mounted toward the direction of travel of the vehicle below the crankcase. In this case, it interferes with the intercooler or the oil cooler disposed below the radiator.

### (3) Problem regarding maneuverability

Inappropriate weight distribution between the front and the rear as described above compromises the maneuverability of the two-wheeled motor vehicle.

### (4) Problem regarding durability

A two-wheeled motor vehicle with a crankshaft generally perpendicular to the direction of travel has an engine greatly protruding in the left-right direction. Disposing a turbocharger or an intercooler in certain ways may result in increased likelihood that the turbocharger or the intercooler is damaged when the vehicle falls over.

### SUMMARY OF THE INVENTION

The present invention was made to solve the above problems. An object of the present invention is to provide a saddle type vehicle with improved cooling efficiency at an intercooler.

Another object of the present invention is to provide a saddle type vehicle with a turbocharger mounted at an appropriate location.

To achieve the above objects, according to an aspect of the present invention, there is provided a saddle type vehicle according to claim 1. The saddle type vehicle includes: an engine; a fuel tank or a dummy tank provided above the engine; and an intercooler provided between the engine and the fuel tank or the dummy tank. The saddle type vehicle includes a duct for directing wind generated while the vehicle is running to the intercooler provided between the engine and the tank.

"Dummy tank" as used herein means a tank-like object replacing the conventional fuel tank at its location when a fuel tank is disposed below the seat, for example. Thus providing an intercooler between the engine and the fuel tank or the dummy tank and directing wind generated while the vehicle is running to the intercooler through the duct allows the intercooler to receive the wind effectively, thereby cooling intake air. Moreover, having an intercooler between the engine and the fuel tank or the dummy tank allows a relatively large intercooler to be mounted on the vehicle.

Furthermore, directing wind generated while the vehicle is running through the duct allows intake air to be cooled efficiently when the vehicle is running at high speeds, i.e. at higher supercharging pressures. Thus, the maximum torque and the maximum output of the engine can be increased.

Moreover, the intercooler does not have to be disposed in front of the engine, resulting in reduced number of components in front of the engine. Thus, the wheel base can be shortened and the engine performance and the body motion performance can be improved.

Further, providing an intercooler above the engine allows the length of the intake pipe to be reduced. Thus, the turbo lag can be reduced and the engine response can be improved. Also, a lighter and more compact vehicle can be realized, leading to reduced cost.

Moreover, providing an intercooler between the engine and the fuel tank or the dummy tank can prevent damage to the intercooler when the vehicle falls over.

Preferably, the saddle type vehicle includes: a valve for controlling an amount of wind generated while the vehicle is running to be introduced into the duct; and a control means that controls the valve based on operation conditions.

By thus using a valve to control the amount of wind generated while the vehicle is running to be introduced into the duct, the amount of wind generated while the vehicle is running received by the intercooler can be controlled.

Preferably, the saddle type vehicle further includes a vent for the wind captured by the duct.

Thus providing a vent allows wind generated while the vehicle is running to be taken efficiently into the duct. Further, since an air route is created above the engine, heat from the engine toward the rider can be reduced.

Preferably, the vent is provided on a side of a body of the vehicle.

Thus providing the vent on a side of the body allows wind generated while the vehicle is running to be sucked out due to a negative pressure generated on the side of the body. This allows wind generated while the vehicle is running to be taken into the duct even more efficiently.

Preferably, the saddle type vehicle further includes a body cover on the side of the body. The vent is provided close to the body cover. A slit is provided in a portion of the body cover close to the vent.

Thus providing a slit in a portion of the body cover close to the vent causes a sucking-off effect at the vent through the slit due to air flowing on the surface of the body cover when the vehicle is running. This allows wind generated while the vehicle is running to be introduced into the duct even more efficiently.

Preferably, the engine is a diesel engine, and the saddle type vehicle further includes an air-cooling fuel cooler provided inside the duct. The air-cooling fuel cooler is disposed in front of the intercooler.

Thus providing an air-cooling fuel cooler inside the duct allows the fuel cooler to be disposed close to the fuel tank. It can also lead to a lighter and more compact vehicle and reduced cost. Further, since the fuel cooler is not exposed to the outside, damage to the body of the fuel cooler or fuel leak can be avoided when the vehicle falls over. Furthermore, disposing the fuel cooler, which is at lower temperatures than the intercooler, in front of the intercooler allows both fuel and intake air to be efficiently cooled due to wind generated while the vehicle is running and captured by the duct.

Preferably, the engine is an engine having a plurality of cylinders, and a plurality of intake air outlets are provided for the intercooler, each corresponding to its respective one of the plurality of the cylinders.

Thus providing a plurality of intake air outlets for the intercooler enables the intercooler to serve as an intake manifold.

Preferably, the engine is an engine mounted such that a crankshaft lies perpendicular to a direction of travel of the vehicle, and the saddle type vehicle further includes a turbocharger mounted on a side of the vehicle adjacent to a cylinder head of the engine.

By thus mounting a turbocharger on a side of the vehicle adjacent to the cylinder head of the engine, the turbocharger can be mounted on the vehicle without difficulty.

Preferably, the engine includes a plurality of cylinders. Exhaust gas passageways from the plurality of cylinders are gathered into one in the cylinder head or in a manifold attached to the cylinder head. The turbocharger is located at an end of the one exhaust gas passageway.

By thus gathering the exhaust gas passageways from the plurality of cylinders into one and locating the turbocharger at an end of the one exhaust gas passageway, the distance between the exhaust outlet of the cylinder head and the turbocharger can be made smaller, thereby reducing the time lag for the initiation of supercharging.

Preferably, the turbocharger is mounted such that an axis of the turbocharger is parallel to the direction of travel of the vehicle and parallel to a surface on which the vehicle travels.

Thus disposing the axis of the turbocharger can prevent seizing-up of the axis of the turbocharger.

Preferably, the turbocharger is mounted such that a turbine side of the turbocharger is located in a front portion of the vehicle and a compressor side of the turbocharger is located in a rear portion of the vehicle.

If the turbocharger is disposed in this way, the compressor side of the turbocharger which is at relatively low temperatures is near the rider; further, the turbine is located in the front portion of the vehicle, thereby allowing the turbine to be cooled by wind generated while the vehicle is running.

Preferably, the turbocharger is mounted inside relative to a plane including: an outer end of a handlebar located on the same side with the turbocharger; an outer end of a crankcase, a crankcase cover or an engine guard; and an outer end of a muffler.

Mounting the turbocharger inside relative to this plane can prevent the turbocharger from being damaged when the two-wheeled motor vehicle falls over.

Preferably, the outer end of the handlebar is the outer end of the handlebar located on the same side with the turbocharger which is turned inwardly.

If the outer end of the handlebar located on the same side with the turbocharger which is turned inwardly is part of the plane relative to which the turbocharger is mounted inside, damage to the turbocharger can be avoided still more efficiently when the two-wheeled motor vehicle falls over.

Preferably, the engine is a parallel multiple-cylinder engine or a V-type multiple-cylinder engine.

Thus, the present invention can be employed in both parallel multiple-cylinder engines and V-type multiple-cylinder engines. A parallel multiple-cylinder engine has a relatively large left-right width, while for a V-type multiple-cylinder engine, it is difficult to provide enough space in front of the engine. According to the present invention, the turbocharger can be mounted on the vehicle without difficulty while accommodating such characteristics of the engines.

It should be noted that the engine of the present invention may be a diesel engine or a gasoline engine.

Thus, the present invention may be employed in both diesel engines and gasoline engines. Particularly, a diesel engine has a large number of components. According to the present invention, the turbocharger can be mounted on the vehicle without difficulty while accommodating such characteristics of the engines.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Figure 1 is a plan view illustrating a disposition of a parallel four-cylinder diesel engine and its surrounding components of a two-wheeled motor vehicle.
Figure 2 is a side view showing a configuration of the interior of the two-wheeled motor vehicle.
Figure 3 is a plan view showing a configuration of an air duct of the two-wheeled motor vehicle.
Figure 4 is a perspective view of intercooler 105.
Figure 5 is a side view showing a configuration of the interior of a two-wheeled motor vehicle according to a second embodiment of the present invention.
Figure 6 is a side view showing a configuration of the interior of a two-wheeled motor vehicle according to a third embodiment of the present invention.
Figure 7 is a plan view showing a configuration of an air duct of the two-wheeled motor vehicle.
Figure 8 is a perspective view of intercooler 105 of Figures 6 and 7.
Figure 9 is a perspective view of an intercooler 105 according to a fourth embodiment of the present invention.
Figure 10 is a plan view of a two-wheeled motor vehicle according to a fifth embodiment of the present invention.
Figure 11 shows wind vent 175b of Figure 10 and nearby components.
Figure 12 illustrates an on-off mechanism for an air duct of a two-wheeled motor vehicle according to a sixth embodiment of the present invention.
Figure 13 is a plan view illustrating a configuration of an engine and its surrounding components of a two-wheeled motor vehicle incorporating a water-cooled four-cylinder diesel engine according to a seventh embodiment of the present invention.
Figure 14 shows a configuration of engine 101 and turbocharger 103 of Figure 13.
Figure 15 is a side view of a two-wheeled motor vehicle incorporating the diesel engine of the seventh embodiment of the present invention.
Figure 16 is a front view of a two-wheeled motor vehicle incorporating the diesel engine of the seventh embodiment of the present invention.
Figure 17 is a side view of a two-wheeled motor vehicle incorporating a diesel engine of an eighth embodiment of the present invention.
Figure 18 is a front view of a two-wheeled motor vehicle incorporating a diesel engine of an eighth embodiment of the present invention.
Figure 19 is a plan view illustrating a configuration of an engine and its surrounding components of a two-wheeled motor vehicle incorporating a V-type engine according to a ninth embodiment of the present invention.

### DESCRIPTION OF THE PREFERRED EMBODIMENTS

### [First Embodiment]

A two-wheeled motor vehicle representing saddle type vehicles according to a first embodiment of the present invention will be described below.

A two-wheeled motor vehicle includes: a parallel four-cylinder diesel engine; a fuel tank provided above the parallel four-cylinder diesel engine; an air-cooling intercooler and an air-cooling fuel cooler provided between the parallel four-cylinder diesel engine and the fuel tank; and an air duct for directing wind generated while the vehicle is running to the intercooler and the fuel cooler.

The air duct serves to capture wind generated while the vehicle is running from ahead of the vehicle and to direct it to the air-cooling intercooler and the air-cooling fuel cooler provided between the parallel four-cylinder diesel engine and the fuel tank. The air duct includes a vent for the captured wind.

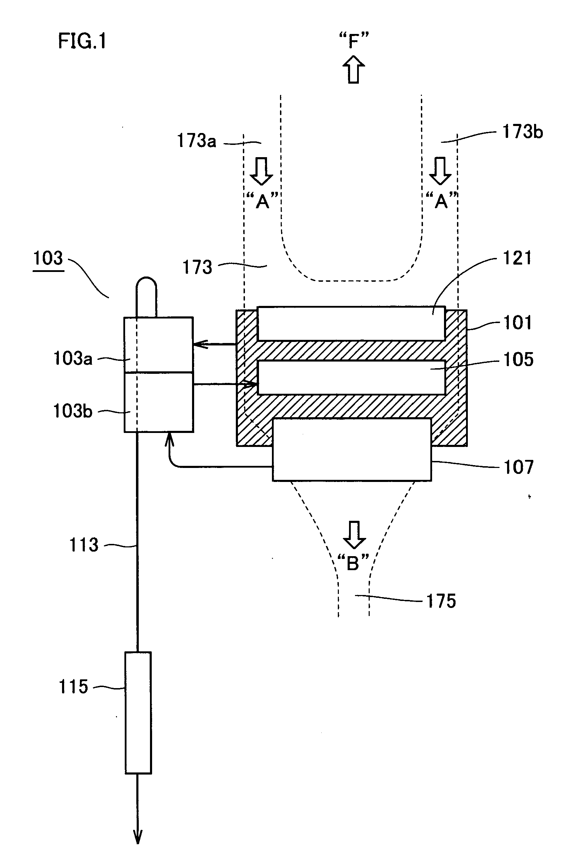

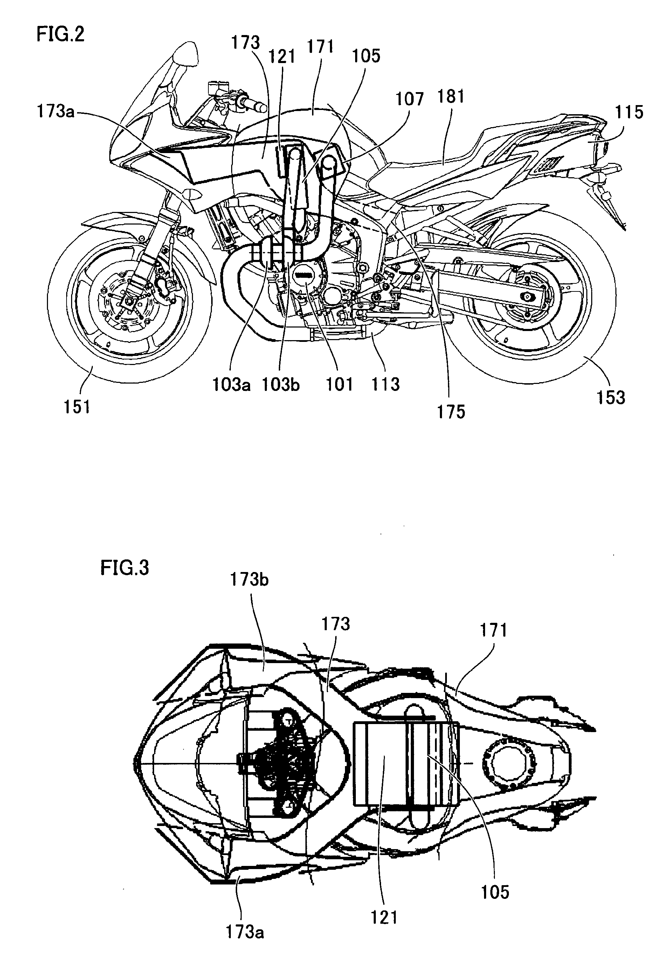

Figure 1 is a plan view illustrating a disposition of a parallel four-cylinder diesel engine and its surrounding components of a two-wheeled motor vehicle; Figure 2 is a side view showing a configuration of the interior of the two-wheeled motor vehicle; and Figure 3 is a plan view showing a configuration of an air duct of the two-wheeled motor vehicle.

In Figure 1, "F" indicates the direction of travel of the two-wheeled motor vehicle when going straight on. Figure 2 shows a front wheel 151, a back wheel 153 and a seat 181 for the rider of the two-wheeled motor vehicle.

An intercooler 105 is disposed above a parallel four-cylinder diesel engine 101 and below a fuel tank 171 (not shown in Figure 1), and a fuel cooler 121 is disposed in front of the intercooler (toward the direction of travel). An air cleaner box 107 is disposed behind intercooler 105 and outside an air duct 173.

Air duct 173 serves to capture wind generated while the vehicle is running from ahead of the two-wheeled motor vehicle and direct it to fuel cooler 121 and intercooler 105. Specifically, wind generated while the vehicle is running is captured through air inlets 173a and 173b on the front of the two-wheeled motor vehicle in the "A" direction. Air duct 173 is configured in such a way that the wind hits fuel cooler 121 and intercooler 105 before being let out through a wind vent 175 in the "B" direction.

Air duct 173 has a small chamber for containing fuel cooler 121 and intercooler 105 within it, and is configured in such a way that wind generated while the vehicle is running captured through two air inlets 173a and 173b is directed into the small chamber and then let out through one wind vent 175 located below seat 181.

By having a room in the center of the body in which intercooler 105 and fuel cooler 121 can be disposed, a relatively large intercooler or fuel cooler can be mounted on the body. Further, the use of air duct 173 to direct wind to intercooler 105 and fuel cooler 121 allows wind generated while the vehicle is running to effectively hit intercooler 105 and fuel cooler 121.

A turbocharger 103 is mounted on the left side of the two-wheeled motor vehicle when viewed facing in the direction of travel, adjacent to the cylinder head of engine 101. Turbocharger 103 compresses fresh air introduced from air cleaner box 107 using a compressor 103b before directing it to intercooler 105. Air cooled by intercooler 105 is introduced into parallel four-cylinder diesel engine 101 located below.

Exhaust gas from parallel four-cylinder diesel engine 101 is directed to a turbine 103a of turbocharger 103 and drives it to rotate. Exhaust gas from turbine 103a is passed through an exhaust pipe 113 and a muffler 115 and exhausted at the rear of the vehicle.

The axis of rotation for turbocharger 103 is generally parallel to the direction of travel of the vehicle when going straight on "F". The crankshaft of engine 101 is generally perpendicular to the direction of travel "F" of the vehicle when going straight on.

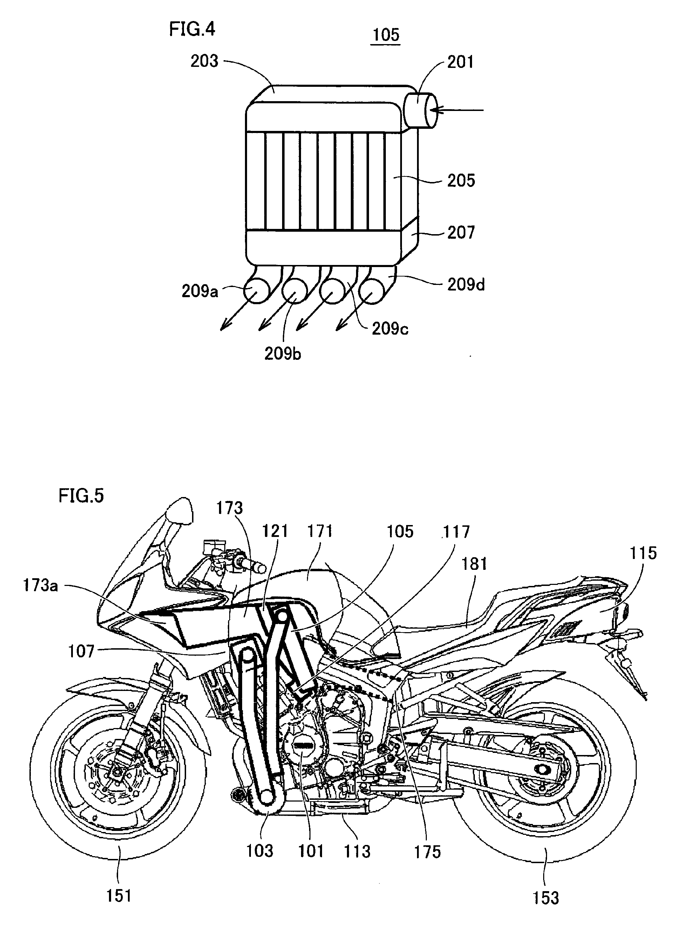

Figure 4 is a perspective view of intercooler 105.

Intercooler 105 includes an air inlet 201, an inlet side chamber 203, a cooling fin 205, an outlet side chamber 207, and a plurality of air outlets (intake pipes) 209a to 209d. The number of air outlets 209a to 209d is equal to that of the cylinders of engine 101. In this implementation, intercooler 105 includes four air outlets 209a to 209d corresponding to the four cylinders.

Air introduced from compressor 103b through air inlet 201 into the intercooler is directed to inlet side chamber 203. Thereafter, the air is divided into a plurality of routes and cooled at cooling fin 205 before being directed to outlet side chamber 207. The cooled air is passed through plurality of air outlets 209a to 209d extending from outlet side chamber 207 and is directed through the intake ports of engine 101 to the cylinders.

Thus, an intercooler 105 having a plurality of air outlets 209a to 209d can also serve as an intake manifold. Also, such a configuration of intercooler 105 is particularly effective when an intercooler is disposed directly above the engine as in the present embodiment, because intercooler 105 can be connected directly to engine 101 without an intake manifold between them.

### [Second Embodiment]

Figure 5 is a side view showing a configuration of the interior of a two-wheeled motor vehicle according to a second embodiment of the present invention.

The two-wheeled motor vehicle of the present embodiment is different from that of the first embodiment in that air cleaner box 107 is disposed in front of intercooler 105 and outside air duct 173, and that turbocharger 103 is disposed at the bottom of the vehicle.

Fresh air introduced from air cleaner box 107 into the system is compressed by the compressor of turbocharger 103 before being directed to intercooler 105. The air cooled by intercooler 105 is introduced into parallel four-cylinder diesel engine 101 located below.

Exhaust gas from parallel four-cylinder diesel engine 101 is directed to the turbine of turbocharger 103 to drive it to rotate. The exhaust gas from the turbine is passed through exhaust pipe 113 and muffler 115 before being exhausted at the rear of the vehicle.

### [Third Embodiment]

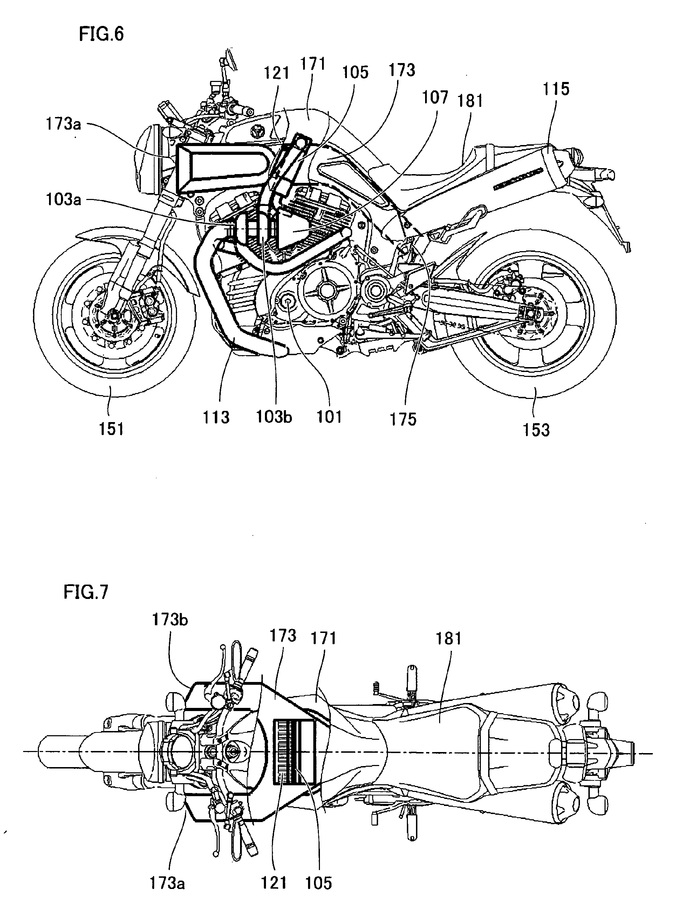

Figure 6 is a side view showing a configuration of the interior of a two-wheeled motor vehicle according to a third embodiment of the present invention, and Figure 7 is a plan view showing a configuration of an air duct of the two-wheeled motor vehicle.

The two-wheeled motor vehicle of the present embodiment is different from that of the first embodiment in that a V-type two-cylinder engine is employed as engine 101, and that air cleaner box 107 is disposed directly behind compressor 103b.

Air duct 173 has a small chamber for containing fuel cooler 121 and intercooler 105 within it, and is configured in such a way that wind generated while the vehicle is running captured through two air inlets 173a and 173b is directed to the small chamber and then let out through one wind vent 175 located below seat 181.

Fresh air introduced from air cleaner box 107 into the system is compressed by compressor 103b of turbocharger 103 before being directed to intercooler 105. The air cooled by intercooler 105 is introduced through a location between the two cylinders of V-type two-cylinder diesel engine 101 located below into the cylinders.

Exhaust gas from the two cylinders of V-type two-cylinder engine 101 is directed to turbine 103a of turbocharger 103 and drives turbine 103a to rotate. Exhaust gas from turbine 103 a is passed through an exhaust pipe 113 and a muffler 115 and exhausted at the rear of the vehicle.

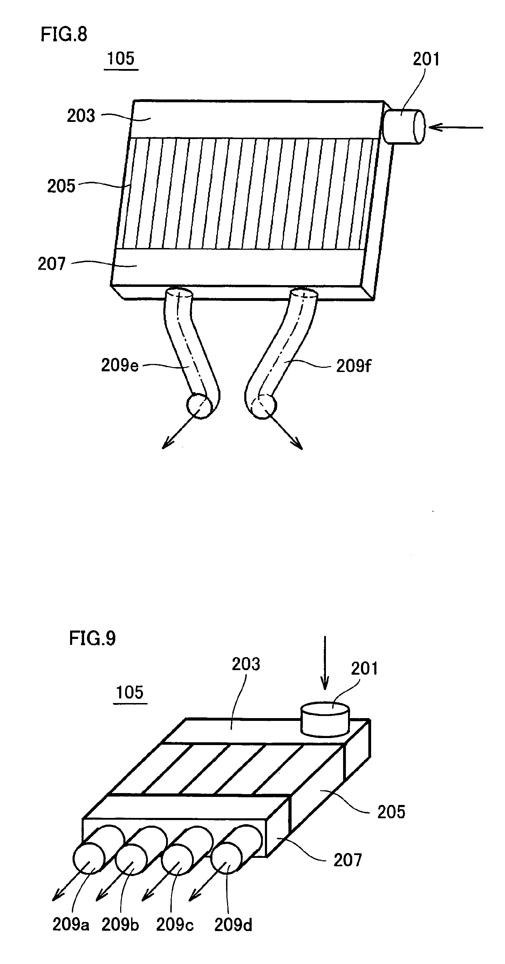

Figure 8 is a perspective view of intercooler 105 of Figures 6 and 7.

Intercooler 105 includes an air inlet 201, an inlet side chamber 203, a cooling fin 205, an outlet side chamber 207, and a plurality of air outlets (intake pipes) 209e and 209f. The number of air outlets 209e and 209f is equal to that of the cylinders of engine 101. In this implementation, intercooler 105 includes two air outlets 209f and 209e corresponding to the two cylinders of the V-type engine.

In the present embodiment, too, an intercooler 105 having a plurality of air outlets 209e and 209f can also serve as an intake manifold. Also, such a configuration of intercooler 105 is particularly effective when an intercooler 105 is disposed directly above the engine as in the present embodiment, because intercooler 105 can be connected directly to engine 101 without an intake manifold between them.

### [Fourth Embodiment]

Figure 9 is a perspective view of an intercooler 105 according to a fourth embodiment of the present invention.

Intercooler 105 includes an air inlet 201, an inlet side chamber 203, a cooling fin 205, an outlet side chamber 207, and a plurality of air outlets (intake pipes) 209a to 209d, the number of which is equal to that of the cylinders of engine 101.

In this implementation, air inlet 201 is configured in such a way that air is introduced into the intercooler from above in the drawing, and plurality of air outlets (intake pipes) 209a to 209d are configured in such a way that air is let out from the intercooler toward the viewer of the drawing.

The intercooler that is shaped as in Figure 9 may be employed if, for example, the portion of the air duct that is in the area of intercooler 105 directs wind generated while the vehicle is running from above toward below, or if the intake port(s) is (are) positioned vertically.

In the present embodiment, too, an intercooler 105 having a plurality of air outlets 209a to 209d can also serve as an intake manifold.

### [Fifth Embodiment]

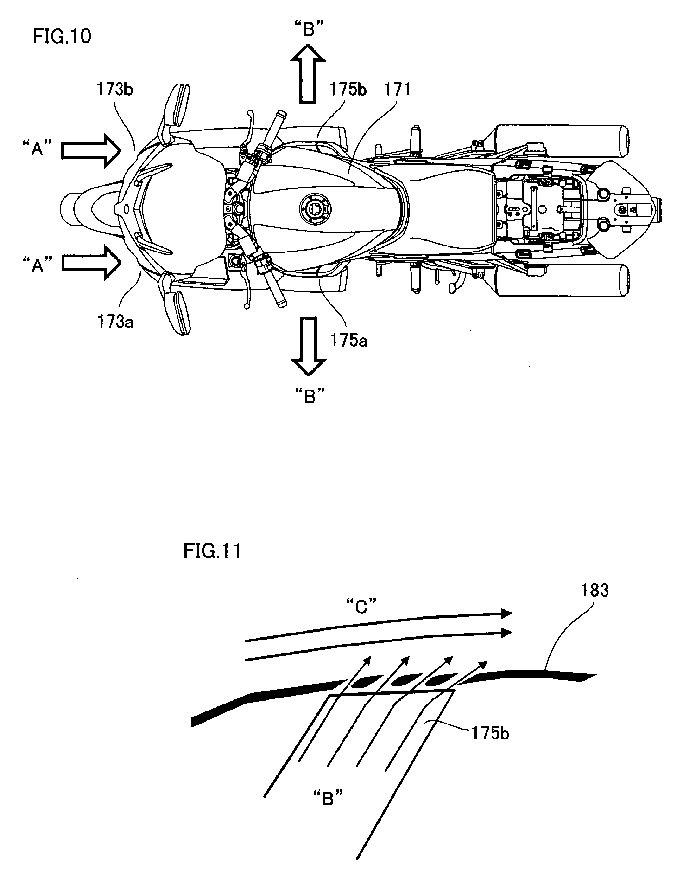

Figure 10 is a plan view of a two-wheeled motor vehicle according to a fifth embodiment of the present invention.

In the preceding embodiments, the air duct captures wind through two air inlets 173a and 173b and lets it out through one wind vent 175. In the present embodiment, the air duct captures wind through two air inlets 173a and 173b in the "A" direction and lets it out through two wind vents 175a and 175b on the left and right sides of the body in the "B" direction, as shown in Figure 10.

More specifically, the two-wheeled motor vehicle is a full cowling vehicle, and wind vents 175a and 175b are disposed on the sides of the cowling.

Figure 11 shows wind vent 175b of Figure 10 and nearby components.

Wind vent 175b is disposed on the side of a cowling (or a body cover such as a side cover) 183, so that a negative pressure is generated by air "C" flowing along the surface of cowling 183 while the vehicle is running, thereby causing a sucking-off effect at wind vent 175b. This allows wind to be introduced into the air duct more efficiently, thereby achieving more efficient cooling of the intercooler and the like.

More specifically, wind vent 175b is disposed near cowling 183. One or more slits are provided on cowling 183 near wind vent 175b. Thus, air inside wind vent 175b is sucked out through the slit(s), as indicated by the arrow "B" in the drawing.

Thus providing one or more slits on the cover of the body near the vent leads to a negative pressure generated by air flowing along the surface of the cover of the body while the vehicle is running. This causes a sucking-off effect at the vent. This will allow wind to be introduced into the duct more efficiently.

Further, the use of a wind vent in the shape of a slit(s) increases the sucking-off effect from the negative pressure.

### [Sixth Embodiments]

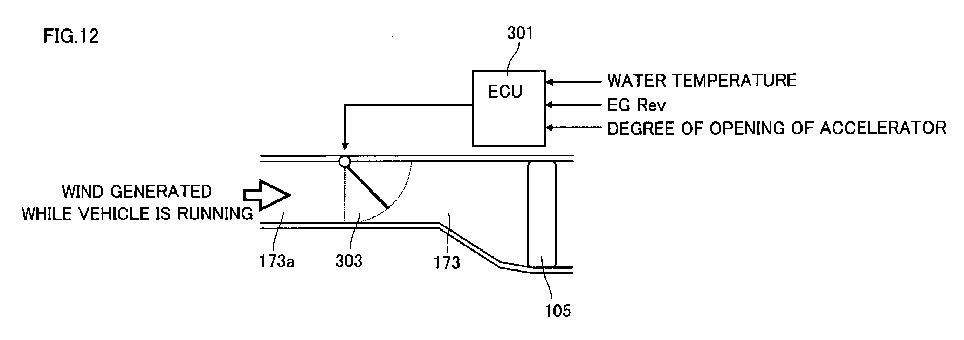

Figure 12 illustrates an on-off mechanism for an air duct of a two-wheeled motor vehicle according to a sixth embodiment of the present invention.

The on-off mechanism can be employed in two-wheeled motor vehicles of the above embodiments.

As shown, an on-off valve 303 is provided near air inlet 173a of air duct 173 and in front of intercooler 105 for controlling the amount of wind generated while the vehicle is running introduced into the air duct. An electronic control unit (ECU) 301 controls on and off of on-off valve 303. The controls are performed based on operation conditions (water temperature, engine speed, the degree of opening of the accelerator, and the like).

In the cold state, on-off valve 303 in the air duct is closed to prevent temperature decrease of intake air. Since intercooler 105 is located between the engine and the fuel tank, there is little unnecessary heat dissipation. Thus, the engine can be quickly warmed up, thereby reducing smoke. After warm-up, on-off valve 303 in the air duct is opened to cool intake air.

The degree of opening of the on-off valve may be varied based on circumstances to control the amount of air flowing through the duct.

### [Effects of the Above Embodiments]

According to the above embodiments, the intercooler may be disposed between the fuel tank and the engine, and wind generated while the vehicle is running may be directed to the intercooler through a duct so that intake air for the engine can be efficiently cooled when the vehicle is running at high speeds, i.e. when the supercharging pressure is high. This will increase the maximum torque and the maximum output of the engine.

Further, a duct may be positioned above the engine and below the fuel tank and the intercooler may be disposed in the duct to allow a relatively large intercooler to be mounted. Further, disposing the intercooler at this location can lead to decreased number of coolers and the like in front of the engine, resulting in reduced wheel base thereby increasing the engine performance and the body motion performance.

Moreover, a duct may be positioned above the engine and below the fuel tank and the intercooler may be disposed in the duct to allow the length of the intake pipe of the engine to be reduced. Thus, the turbo lag can be reduced, thereby improving engine response. Further, damage to the intercooler when the vehicle falls over can be avoided. Furthermore, the vehicle can be made lighter and more compact, and the cost can be reduced.

Further, the use of a duct allows wind generated while the vehicle is running to be exhausted from under the seat to the backward, thereby allowing wind to be efficiently introduced into the duct. Also, disposing the duct above the engine leads to reduced heat from the engine toward the rider.

Further, by using a negative pressure generated on the side of the cowling to suck off wind in the duct, as in Figures 10 and 11, wind generated while the vehicle is running can be introduced into the duct still more efficiently.

Further, disposing the fuel cooler close to the fuel tank results in reduced distance between the fuel tank and the common rail, thereby achieving a lighter and more compact vehicle and reduced cost. Moreover, by not exposing the fuel cooler to the outside, damage to the cooler itself and the spilling of fuel can be avoided when the vehicle falls over, thereby ensuring safety.

Also, when the fuel cooler, which is at lower temperatures than the intercooler, is disposed in front of it in a parallel manner, both fuel and intake air can be efficiently cooled using wind generated while the vehicle is running captured by the duct.

Moreover, when the intercooler is located near the engine, an intercooler with an integrated intake manifold can be employed, as shown in Figures 4, 8 and 9. In these implementations, the downstream piping into which air exhausted from the intercooler flows can be in left-right symmetry, thereby minimizing variations in combustion among the cylinders. Also, reducing the number of components leads to a lighter and more compact vehicle.

### [Others]

The present invention can be employed in diesel and gasoline engines including an intercooler.

Further, while the above embodiments describe configurations in which a fuel tank is provided above the engine, the fuel tank can be replaced by another tank (for example, a dummy tank for containing a helmet or accessories) disposed above the engine and a fuel tank can be provided elsewhere.

Also, the present invention can be employed in saddle type vehicles such as two-wheeled motor vehicles and motor-assisted bicycles. The present invention can be carried out in any type of saddle type vehicles, such as two-wheeled, three-wheeled, and four wheeled vehicles (or vehicles with more wheels), or vehicles that can be moved using a crawler mechanism.

### [Seventh Embodiment (about mounting locations for the turbocharger)]

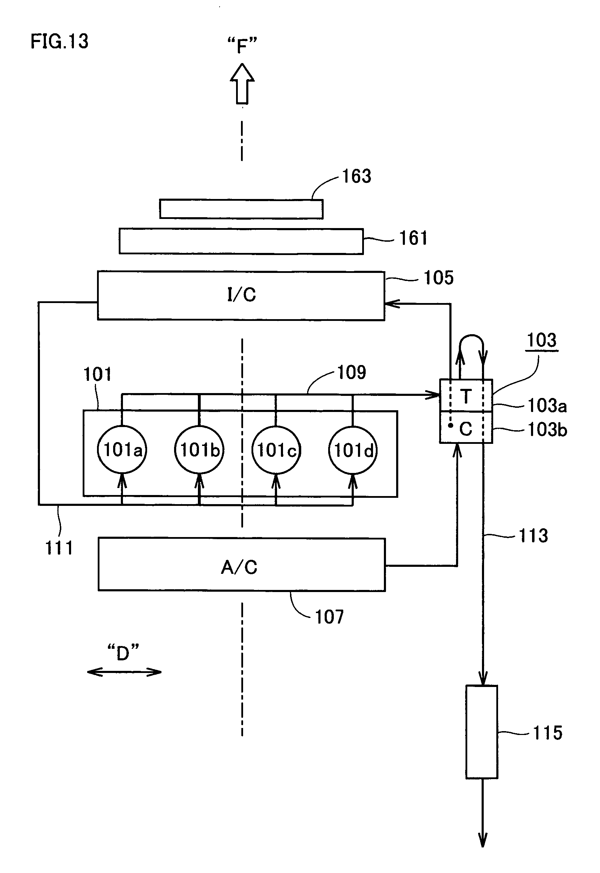

Figure 13 is a plan view illustrating a configuration of an engine and its surrounding components of a two-wheeled motor vehicle incorporating a water-cooled four-cylinder diesel engine according to a seventh embodiment of the present invention.

As described in the above first to sixth embodiments, when a turbocharger is to be mounted on a two-wheeled motor vehicle incorporating a three-cylinder or four-cylinder water-cooled diesel engine with a large width, all of the following problems need to be solved at a higher level: (a) the time lag for the initiation of supercharging; (b) the disposition of the turbocharger, the radiator, the intercooler, the oil cooler and the like which neither causes difficulty nor results in an excessive length along the direction of travel; and (c) compactness in the left-right direction, which prevents damage when the vehicle falls over. The two-wheeled motor vehicle of the present embodiment meets these needs.

Referring to Figure 13, the outlined arrow "F" indicates the direction of travel of the two-wheeled motor vehicle when going straight on. The other arrows indicate flows of air and exhaust gas (and piping through which such flows are passed). The dashed-dotted line indicates the axis of the vehicle going through its center.

The two-wheeled motor vehicle includes: a diesel engine 101 having four parallel cylinders 101a to 101d; an air cleaner 107 cleaning air to be introduced into the engine; a turbocharger 103 having a compressor 103b compressing air directed from air cleaner 107; an intercooler 105 cooling air compressed by compressor 103b; an intake manifold 111 dividing air from intercooler 105 into four streams and introducing them into four respective cylinders 101a to 101d; an exhaust manifold 109 gathering exhaust gas from four cylinders 101a to 101d; a turbine 103a in turbocharger 103 being rotated by exhaust gas to rotate compressor 103b; an exhaust pipe 113 for carrying exhaust gas from turbine 103a toward the rear of the vehicle; and a muffler 115 muffling the sound of exhaust gas from exhaust pipe 113.

In addition, in the front of the two-wheeled motor vehicle are provided a radiator 161 for cooling engine 101 and a fuel cooler 163 for cooling fuel returned to the fuel tank to suppress increase in temperature of fuel.

The axis of rotation of compressor 103b and turbine 103a (axis of rotation for turbocharger 103) is generally parallel to the direction of travel "F" of the vehicle when going straight on, and to the surface on which the vehicle travels. The direction "D" in which the crankshaft of engine 101 extends is generally perpendicular to the direction of travel "F" of the vehicle when going straight on.

If the axis of rotation for turbocharger 103 were parallel to the crankshaft (i.e. in the left-right direction of the vehicle), the bearing of the turbocharger would suffer seizing-up when the two-wheeled motor vehicle is inclined at a curve for a prolonged period of time. The present embodiment avoids seizing-up by positioning the axis of rotation for turbocharger 103 generally parallel to the direction of travel "F" of the vehicle when going straight on.

Turbocharger 103 is located on the right side of the vehicle when viewed facing in the direction of travel (adjacent the cylinder head of engine 101). Exhaust manifold 109 is connected to the cylinder head of engine 101. Exhaust manifold 109 lets exhaust gas from four cylinders 101 a to 101d out in the direction of travel "F" of the vehicle before directing it to the right side of the vehicle when viewed facing in the direction of travel and then introducing it into turbine 103a of turbocharger 103.

Exhaust gas from turbine 103a is directed in the direction of travel "F" of the vehicle before being directed backward below turbocharger 103 to muffler 115 located in the rear of the vehicle.

It should be noted that turbocharger 103 may be disposed on the right side or the left side of the vehicle.

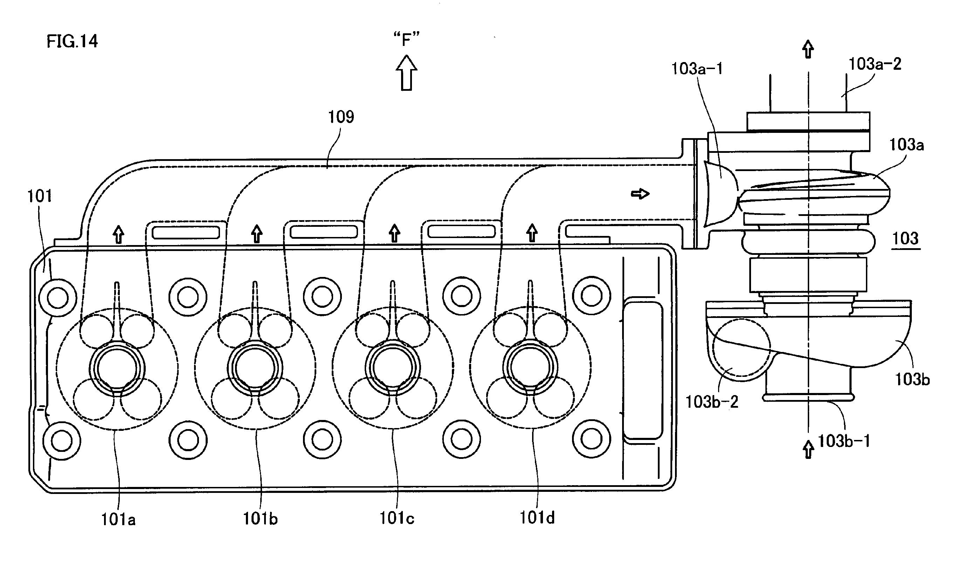

Figure 14 shows a configuration of engine 101 and turbocharger 103 of Figure 13.

As shown in Figure 14, turbocharger 103, exhaust manifold 109 and the cylinder head of engine 101 are located on one and the same plane (at the same level). Turbocharger 103 is located on the side of the cylinder head of engine 101 and exhaust manifold 109.

The dashed-dotted line indicates the axis of rotation for turbocharger 103. Compressor 103b takes air in through an air inlet 103b-1 located in the rear and let compressed air out through an air outlet 103b-2, which faces downward. Air let out downward through air outlet 103b-2 is directed through a pipe toward the front of the vehicle and introduced into intercooler 105.

Exhaust manifold 109 lets out exhaust gas from four cylinders 101a to 101d in the direction of travel of the vehicle before introducing it into exhaust inlet 103a-1 of turbine 103a. That is, exhaust manifold 109 is directly connected to exhaust inlet 103a-1 of turbine 103a of turbocharger 103.

Connecting the engine to the turbocharger in this way results in reduced distance between the exhaust ports of the cylinder head and turbocharger 103. This leads to reduced time lag for the initiation of supercharging.

Disposing the parallel multiple-cylinder engine with its crankshaft perpendicular to the direction of travel of the vehicle results in increased left-right width of the vehicle. Thus, it is preferable to dispose the turbocharger in such a way that the width of the vehicle is as small as possible. Specifically, it is desirable to have as small a length of exhaust manifold 109 as possible, and to dispose the cylinder head as close to turbocharger 103 as possible.

Exhaust gas from turbine 103a is directed from exhaust outlet 103a-2 in the direction of travel of the vehicle before being directed backward below turbocharger 103 to the muffler, located in the rear portion of the vehicle.

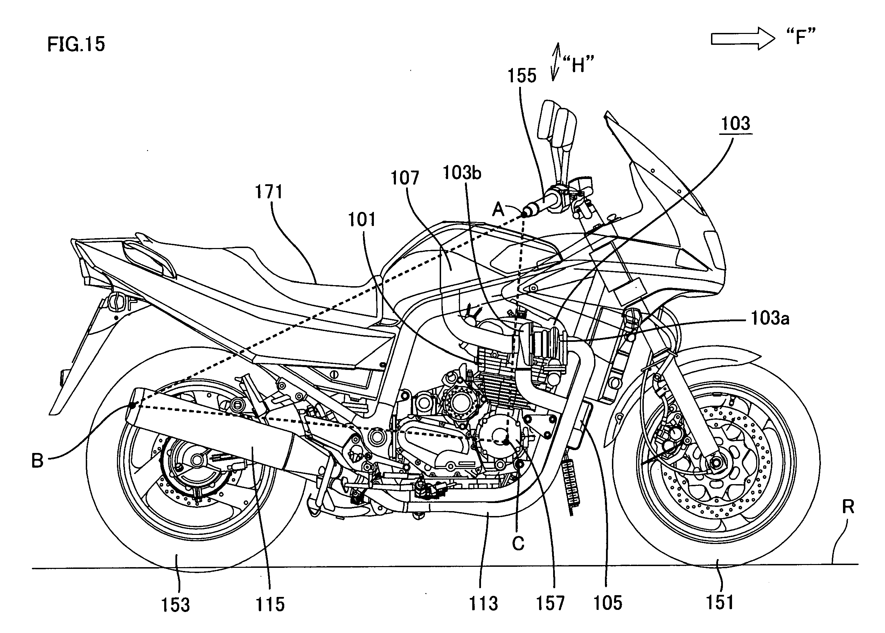

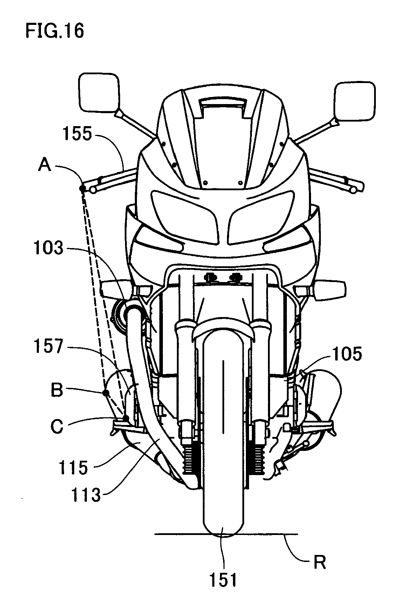

Figure 15 is a side view of a two-wheeled motor vehicle incorporating the diesel engine of the seventh embodiment of the present invention, and Figure 16 is a front view of the same.

As shown, the two-wheeled motor vehicle includes a front wheel 151, a back wheel 153 and handlebars 155. The cylinder axis of engine 101 (i.e. the direction in which the piston(s) in the engine move(s)) is indicated by the arrow "H". As have been explained referring to Figures 13 and 14, turbocharger 103 is provided on the right side of the vehicle next to the cylinder head of engine 101. Air from air cleaner 107 is introduced into compressor 103b of turbocharger 103 from the rear of the vehicle. Air compressed by compressor 103b is let out through the bottom of compressor 103b and directed to intercooler 105 mounted in the front of the vehicle.

Air let out of intercooler 105 is passed on the left side of the vehicle and introduced into engine 101 as intake air.

Exhaust gas let out through the cylinder head of engine 101 is passed through the exhaust manifold and introduced into turbine 103a of turbocharger 103 located next to the cylinder head.

Exhaust gas from turbine 103a is directed through exhaust pipe 113 to the front of the vehicle, before being passed backward below the vehicle and directed to muffler 115.

Turbocharger 103 is mounted inside relative to a plane including the following three points: the outer end (A) of the one of handlebars 155 located on the same side with turbocharger 103 of the two-wheeled motor vehicle (on the right side of the vehicle in the present implementation), the outer end (C) of crankcase 157 (or a crankcase cover) and the outer end (B) of muffler 115 (in the drawings, the triangle formed by connecting (A), (B) and (C) is shown in dashed lines).

The outer end (A) of the handlebar is desirably the outer end of the one of handlebars 155 located on the same side with turbocharger 103 which is turned inwardly. More specifically, turbocharger 103 is mounted on the right side of the vehicle. The point (A) in Figure 15 is defined by the right end of handlebars 155 positioned when front wheel 151 is turned all the way to the right.

Disposing turbocharger 103 in this position prevents turbocharger 103 from coming in contact with the road surface even when the two-wheeled motor vehicle falls over on the side on which turbocharger 103 is disposed. Thus, damage to turbocharger 103 can be avoided.

Further, turbocharger 103 is disposed in such a way that compressor 103b, which is at relatively low temperatures, is near seat 171 (i.e. turbine 103a is far from seat 171). Disposing turbine 103a in the front of the vehicle allows turbine 103a to be cooled by wind generated while the vehicle is running.

### [Eighth Embodiment]

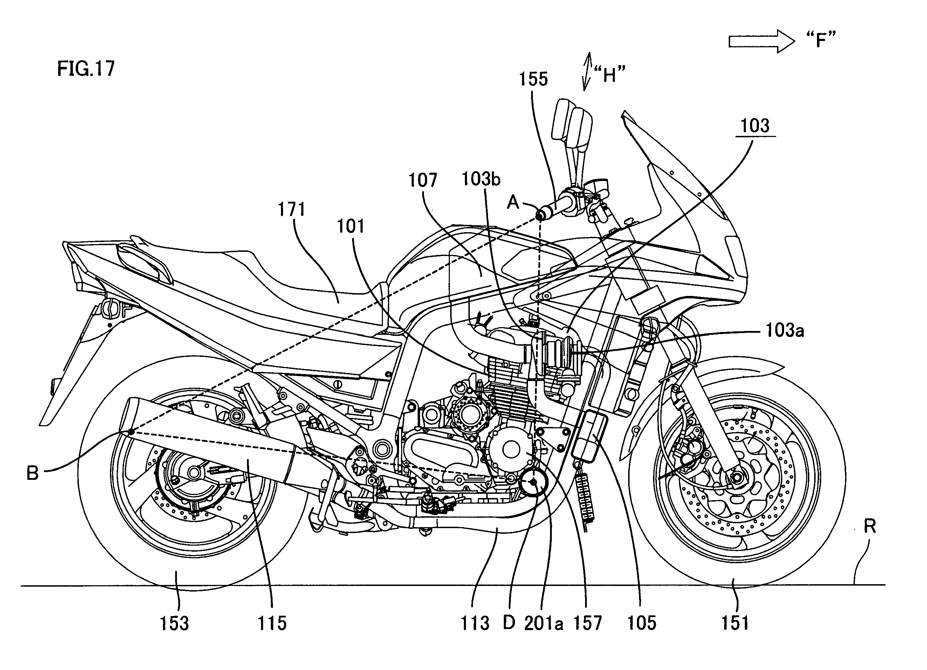

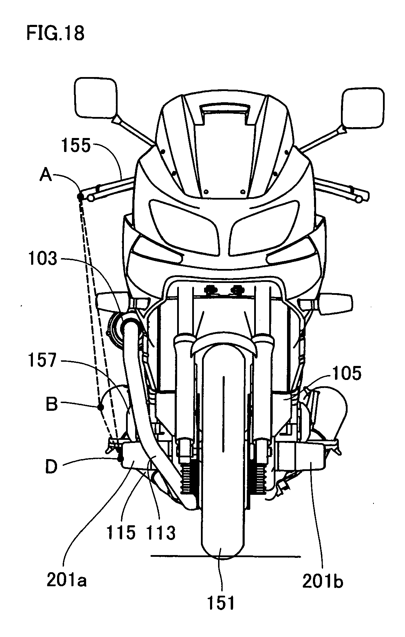

Figure 17 is a side view of a two-wheeled motor vehicle incorporating a diesel engine of an eighth embodiment of the present invention, and Figure 18 is a front view of the same.

The two-wheeled motor vehicle of the present embodiment is different from that of the seventh embodiment in that engine guards (protectors) 201 a and 201b are provided on the right and left sides of the vehicle, respectively, for protecting the engine. Engine guards (protectors) 201a and 201b are mounted in such a way that they protrude to the right and left of the vehicle beyond crankcase 157 (or a crankcase cover), thereby preventing damage to crankcase 157 (or the crankcase cover) when the vehicle falls over.

Turbocharger 103 is mounted inside relative to a plane including the following three points: the outer end (A) of the one of handlebars 155 located on the same side with turbocharger 103 of the two-wheeled motor vehicle (on the right side of the vehicle in the present implementation), the outer end (D) of engine guard (protector) 201a and the outer end (B) of the muffler (in the drawings, the triangle formed by connecting (A), (B) and (D) is shown in dashed lines).

Further, the outer end (A) of the handlebar is desirably the outer end of the one of handlebars 155 located on the same side with turbocharger 103 which turned inwardly.

Similar to the seventh embodiment, disposing turbocharger 103 in this position prevents turbocharger 103 from coming in contact with the road surface even when the two-wheeled motor vehicle falls over on the side on which turbocharger 103 is disposed. Thus, damage to turbocharger 103 can be avoided.

### [Ninth Embodiment]

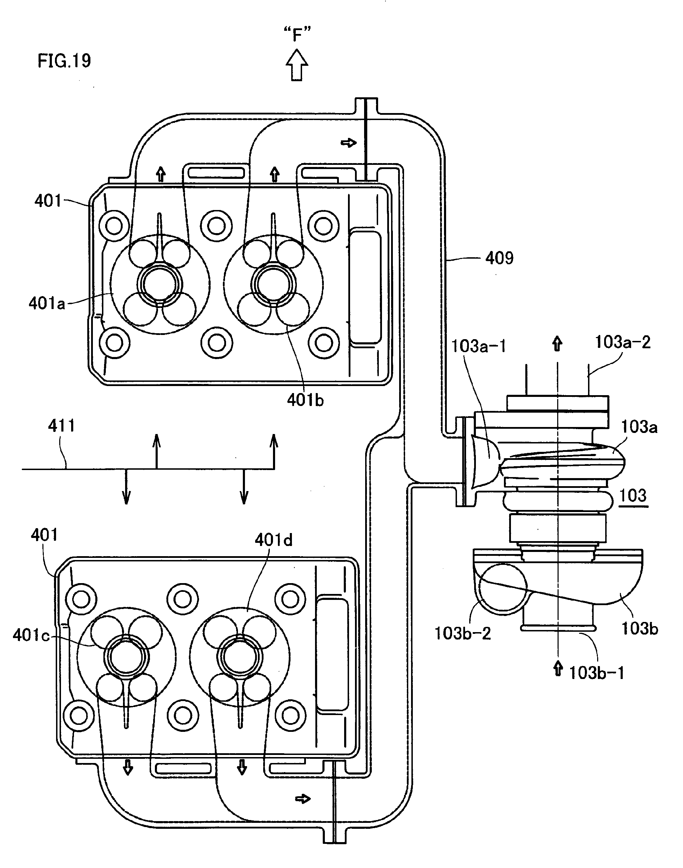

Figure 19 is a plan view illustrating a configuration of an engine and its surrounding components of a two-wheeled motor vehicle incorporating a V-type engine according to a ninth embodiment of the present invention.

Referring to the drawing, the arrow "F" indicates the direction of travel of the two-wheeled motor vehicle when going straight on. Other arrows indicate flows of air and exhaust gas (and piping through which such flows are passed). The dashed-dotted line indicates the axis of rotation for turbocharger 103.

The two-wheeled motor vehicle incorporates an engine 401 including four cylinders 401a to 401d. Cylinders 401 a and 401b are located in the front of the vehicle while cylinders 401 c and 401 d are located in the rear of the vehicle.

An intake manifold 411 placed between cylinders 401 a, 401 b and cylinders 401c, 401 d is used to direct cooled air from the intercooler into cylinders 401 a to 401d.

An exhaust manifold 409 placed around cylinders 401a to 401 d is used to direct exhaust gas from engine 401 into turbine 103a of turbocharger 103.

In the present embodiment, too, the cylinder head including the exhaust ports of engine 401, exhaust manifold 409 and turbine 103a of turbocharger 103 are located generally at one and the same level. Further, turbine 103a of turbocharger 103 is disposed next to the cylinder head of engine 401.

This leads to a smaller distance between the exhaust ports of the cylinder head and turbocharger 103, thereby shortening the time lag for the initiation of supercharging.

In the present embodiment, too, it is desirable to locate turbocharger 103 such that it is less likely to be damaged when the vehicle falls over, as shown in Figures 15 to 18.

### [Effects of the Embodiments]

As described above, the above embodiments allow a saddle type vehicle to incorporate a radiator for cooling the engine, an intercooler and a turbocharger without difficulty. This eliminates the necessity for extending the wheel base of the saddle type vehicle, achieving balanced weight distribution.

A smaller distance between the exhaust ports of the cylinder head and the turbocharger can also be achieved, thereby shortening the time lag for the initiation of supercharging.

The embodiments further dispose the axis of the turbocharger parallel to the direction of travel of the vehicle and parallel to the surface on which the vehicle travels, thereby avoiding seizing-up of the axis of the turbocharger.

Moreover, the compressor side of the turbocharger, which is at relatively low temperatures, faces the seat so that its turbine side can be located far from the rider. This results in a turbine located in the front of the vehicle, thereby allowing the turbine to be cooled efficiently by wind generated while the vehicle is running.

Further, the turbocharger can be located such that it is unlikely to be damaged when the vehicle falls over as shown in Figures 15 to 18, avoiding damage to the turbocharger as well as avoiding inability of the vehicle to move.

Diesel engines have more components than gasoline engines do, like an intercooler or a fuel cooler. Thus, employing the present invention in a diesel engine is effective in that all the components can be disposed in a reasonable manner, resulting in a two-wheeled motor vehicle with improved traveling performance.

Moreover, diesel engines have lower temperatures of exhaust gas than gasoline engines, meaning a smaller energy in exhaust gas. Minimizing the decrease in temperature of exhaust gas from the exhaust ports when it is introduced into the turbocharger, as the above embodiments teach, allows the turbocharger to operate efficiently. Since exhaust gas streams from the cylinders of a diesel engine rarely interfere with each other, engine performance is unlikely to be decreased when the manifold immediately gathers the exhaust gas streams.

In V-type multiple-cylinder engines, unlike parallel engines, the cylinder(s) in the front of the vehicle are often inclined toward the front, pushed out by the rear cylinder(s). It is therefore not easy to provide enough space in front of the engine. Disposing the turbocharger at an end of the cylinder head as viewed along the length of the crankshaft, as the above embodiments teach, allows for reasonable disposition of components.

### [Others]

It should be noted that, instead of using an exhaust manifold, exhaust gas routes from a plurality of cylinders may be gathered inside the cylinder head and introduced into a turbocharger located next to the cylinder head.

The present invention may be employed in a diesel engine or gasoline engine, as long as it includes a turbocharger.

It should be understood that the above embodiments are exemplary only and not restrictive in any way. The scope of the present invention is indicated not by the above description but by the Claims, and all the modifications equivalent to and within the Claims are intended to be included.

## Claims

1. A saddle type vehicle including:
an engine (101); and
a fuel tank (171) or a dummy tank provided above the engine (101), and
a duct (173) for capturing wind generated while the vehicle is running from ahead of the vehicle and directing it to an intercooler (105) , the intercooler (105) being provided between the engine (101) and the fuel tank (171) or the dummy tank,**characterized in that** the intercooler (105) is an air-cooling intercooler;
the duct (173) includes an air inlet (173a, 173b) and a wind vent (175); and
the intercooler (105) is contained in the duct (173) between the air inlet (173a, 173b) and a wind vent (175) and is provided at a center of a width direction of the vehicle.

2. The saddle type vehicle according to claim 1, **characterized by** a valve (303) for controlling an amount of wind generated while the vehicle is running to be introduced into the duct (173); and a control means (301) that controls the valve (303) based on operation conditions.

3. The saddle type vehicle according to claim 1 or 2, **characterized by** a vent (175) for the wind captured by the duct (173).

4. The saddle type vehicle according to claim 3, **characterized in that** the vent (175a, 175b) is provided on a side of a body of the vehicle.

5. The saddle type vehicle according to claim 4, **characterized by** a body cover (183) on the side of the body, and further **characterized in that** the vent (175a, 175b) is provided close to the body cover (183), and a slit is provided in a portion of the body cover (183) close to the vent (175a, 175b).

6. The saddle type vehicle according to any one of the preceding claims,
**characterized in that**
the engine (101) is a diesel engine, and further **characterized by** an air-cooling fuel cooler (121) provided inside the duct (173), and further **characterized in that**
the air-cooling fuel cooler (121) is disposed in front of the intercooler (105).

7. The saddle type vehicle according to any one of the preceding claims,
**characterized in that**
the engine (101) is an engine having a plurality of cylinders, and
a plurality of intake air outlets (209a-209d) are provided for the intercooler (105), each corresponding to its respective one of the plurality of the cylinders.

8. The saddle type vehicle according to any one of the preceding claims,
**characterized in that**
the engine (101) is an engine mounted such that a crankshaft lies perpendicular to a direction of travel (F) of the vehicle, and further **characterized by** a turbocharger (103) mounted on a side of the vehicle adjacent to a cylinder head of the engine

9. The saddle type vehicle according to claim 8, **characterized in that** the engine (101) includes a plurality of cylinders,
exhaust gas passageways from the plurality of cylinders are gathered into one in the cylinder head or in a manifold attached to the cylinder head, and
the turbocharger (103) is located at an end of the one exhaust gas passageway.

10. The saddle type vehicle according to claim 8 or 9, **characterized in that** the turbocharger (103) is mounted such that an axis of the turbocharger (103) is parallel to the direction of travel (F) of the vehicle and parallel to a surface on which the vehicle travels.

11. The saddle type vehicle according to any one of claims 8 to 10,
**characterized in that**
the turbocharger (103) is mounted such that a turbine side (103a) of the turbocharger (103) is located in a front portion of the vehicle and a compressor side (103b) of the turbocharger is located in a rear portion of the vehicle.

12. The saddle type vehicle according to any one of claims 8 to 11,
**characterized in that**
the turbocharger (103) is mounted inside relative to a plane including: an outer end (A) of a handlebar (155) located on the same side with the turbocharger (103); an outer end (C) of a crankcase (157), a crankcase cover (C) or an engine guard (D, 20 1 a); and an outer end (B) of a muffler (115).

13. The saddle type vehicle according to claim 12, **characterized in that** the outer end (A) of the handlebar (155) is the outer end (A) of the handlebar (155) located on the same side with the turbocharger (103) which is turned inwardly.

14. The saddle type vehicle according to any one of claims 8 to 13,
**characterized in that**
the engine (101) is a parallel multiple-cylinder engine or a V-type multiple-cylinder engine.

## Patentansprüche

1. Ein Sattelfahrzeugtyp aufweisend:
einen Motor (101), und
einen Benzintank (171) oder einen Dummytank, der oberhalb des Motors (101) vorgesehen ist, und
einen Kanal (173) zum Einfangen von Wind vorderhalb des Fahrzeugs der generiert wird, während das Fahrzeug fährt und zum Weiterleiten an einen Zwischenkühler (105),
der Zwischenkühler (105) ist zwischen dem Motor (101) und dem Benzintank (171) oder dem Dummytank angeordnet, **dadurch gekennzeichnet, dass**
der Zwischenkühler (105) ein Luftzwischenkühler ist,
der Kanal (173) einen Lufteinlass (173a, 173b) und eine Windentlüftung (175) beinhaltet, und der Zwischenkühler (105) innerhalb des Kanals (173) zwischen dem Lufteinlass (173a, 173b) und der Windentlüftung (175) angeordnet ist und an einem Zentrum in einer Breitenrichtung des Fahrzeugs bereitgestellt ist.

2. Der Sattelfahrzeugtyp gemäß Anspruch 1, **gekennzeichnet durch,** ein Ventil (303) dass zum Steuern einer Windmenge vorgesehen ist, die während das Fahrzeug fährt, erzeugt wird und in den Kanal (173) eingeleitet wird, und
ein Kontrollmittel (301) zum Steuern des Ventils (303) basierend auf Betriebsbedingungen.

3. Der Sattelfahrzeugtyp gemäß Anspruch 1 oder 2, **gekennzeichnet durch** eine Entlüftung (175) für den **durch** den Kanal (173) eingefangenen Wind.

4. Der Sattelfahrzeugtyp gemäß Anspruch 3, **dadurch gekennzeichnet, dass** die Entlüftung (175a, 175b) an einer Seite eines Rahmens des Fahrzeugs bereitgestellt ist.

5. Der Sattelfahrzeugtyp gemäß Anspruch 4, **gekennzeichnet durch** eine Rahmenabdeckung (183) an der Seite des Rahmens und weiter **gekennzeichnet dadurch, dass** die Entlüftung (175a, 175b) nahe an der Rahmenabdeckung (183) vorgesehen ist, und ein Schlitz an einem Abschnitt der Rahmenabdeckung (183) nahe an der Entlüftung (175a, 175b) vorgesehen ist.

6. Der Sattelfahrzeugtyp gemäß einem der vorhergehenden Ansprüche, **dadurch gekennzeichnet, dass** der Motor (101) ein Dieselmotor ist und weiter durch einen luftgekühlten Benzinkühler (121) gekennzeichnet ist, der innerhalb des Kanals (173) vorgesehen ist und weiter gekennzeichnet ist dass der luftgekühlte Benzinkühler (121) vorderhalb des Zwischenkühlers (105) vorgesehen ist.

7. Der Sattelfahrzeugtyp gemäß einem der vorhergehenden Ansprüche, **dadurch gekennzeichnet, dass** der Motor (101) ein Motor ist, der eine Mehrzahl von Zylindern aufweist, und eine Mehrzahl von Lufteinlassöffnungen (209a-209d), die für den Zwischenkühler (105) bereitgestellt sind und jede jeweils mit einem der Mehrzahl der Zylinder korrespondiert.

8. Der Sattelfahrzeugtyp gemäß einem der vorhergehenden Ansprüche, **dadurch gekennzeichnet, dass** der Motor (101) ein Motor ist, der so montiert ist, dass eine Kurbelwelle rechtwinklig zu einer Fahrtrichtung (F) des Fahrzeugs liegt, und weiter durch einen Turbolader (103) gekennzeichnet ist, der an einer Seite des Fahrzeugs neben einem Zylinderkopf des Motors montiert ist.

9. Der Sattelfahrzeugtyp gemäß Anspruch 8, **dadurch gekennzeichnet, dass** der Motor (101) eine Mehrzahl von Zylindern beinhaltet und Abgasführungen von der Mehrzahl der Zylinder in einen in dem Zylinderkopf gesammelt werden oder in einen Sammler, der an dem Zylinderkopf angebracht ist, und der Turbolader (103) an einem Ende der einen Abgasführung vorgesehen ist.

10. Der Sattelfahrzeugtyp gemäß Anspruch 8 oder 9, **dadurch gekennzeichnet, dass** der Turbolader (103) so montiert ist, dass eine Achse des Turboladers (103) parallel zur Fahrtrichtung (F) des Fahrzeugs ist und parallel zu einer Oberfläche ist, auf der das Fahrzeug fährt.

11. Der Sattelfahrzeugtyp gemäß einem der Ansprüche 8 bis 10, **dadurch gekennzeichnet, dass** der Turbolader (103) so montiert ist, dass eine Turbinenseite (103a) des Turboladers (103) an einem vorderen Abschnitt des Fahrzeugs angeordnet ist und eine Kompressorseite (103b) des Turboladers an einem hinteren Abschnitt des Fahrzeugs angeordnet ist.

12. Der Sattelfahrzeugtyp gemäß einem der Ansprüche 8 bis 11, **dadurch gekennzeichnet, dass** der Turbolader (103) innerhalb relativ zu einer Ebene montiert ist, die beinhaltet: ein äußeres Endes (A) eines Lenkers (155), das an der gleichen Seite mit dem Turbolader (103) angeordnet ist, ein äußeres Ende (C) eines Kurbelgehäuses (157), eine Kurbelgehäuseabdeckung (110) oder ein Motorschutz (D, 201 a); und ein äußeres Ende (B) eines Sammlers (115).

13. Der Sattelfahrzeugtyp gemäß Anspruch 12, **dadurch gekennzeichnet, dass** das äußere Ende (A) des Lenkers (155) das äußere Ende (A) des Lenkers (155) ist, das an der gleichen Seite mit dem Turbolader (103) angeordnet ist, der nach innen geneigt ist.

14. Der Sattelfahrzeugtyp gemäß einem der Ansprüche 8 bis 13, **dadurch gekennzeichnet, dass** der Motor (103) ein paralleler Mehrzylindermotor oder ein V-Mehrzylindertypmotor ist.

## Revendications

1. Véhicule de type à selle comprenant :
un moteur (101) ; et
un réservoir de carburant (171) ou un faux réservoir disposé au-dessus du moteur (101), et
un conduit (173) pour capter le vent généré quand le véhicule est en marche depuis l'avant du véhicule et le conduire vers un échangeur (105), l'échangeur (105) étant disposé entre le moteur (101) et le réservoir de carburant (171) ou le faux réservoir, **caractérisé en ce que**
l'échangeur est un échangeur air/air ;
le conduit (173) comprend une admission d'air (173a, 173b) et une ouverture d'échappement du vent (175) ; et
l'échangeur (105) est contenu dans le conduit (173) entre l'admission d'air (173a, 173b) et une ouverture d'échappement du vent (175) et est disposé au centre de la largeur du véhicule.

2. Véhicule de type à selle selon la revendication 1, **caractérisé par** une vanne (303) pour commander une quantité de vent, générée pendant la marche du véhicule, à introduire dans le conduit (173) ; et
un moyen de commande (301) qui commande la vanne (303) sur la base des conditions de fonctionnement.

3. Véhicule de type à selle selon la revendication 1 ou 2, **caractérisé par** une ouverture d'échappement (175) pour le vent capturé par le conduit (173).

4. Véhicule de type à selle selon la revendication 3, **caractérisé en ce que** l'ouverture d'échappement (175a, 175b) est disposée sur un côté d'un châssis du véhicule.

5. Véhicule de type à selle selon la revendication 4, **caractérisé par** un capot de châssis (183) sur le côté du châssis et **caractérisé en outre en ce que** l'ouverture d'échappement (175a, 175b) est disposée à proximité du capot de châssis (183), et
une fente est disposée dans une partie de capot de châssis (183) à proximité de l'ouverture d'échappement (175a, 175b)

6. Véhicule de type à selle selon l'une quelconque des revendications précédentes, **caractérisé en ce que**
le moteur (101) est un moteur diesel et **caractérisé en outre par** un refroidisseur de carburant à air (121) disposé à l'intérieur du conduit (173) et **caractérisé en outre en ce que**
le refroidisseur de carburant à air (121) est disposé devant l'échangeur (105).

7. Véhicule de type à selle selon l'une quelconque des revendications précédentes, **caractérisé en ce que**
le moteur (101) est un moteur comportant une pluralité de cylindres et qu'une pluralité de sorties d'air admis (209a-209d) sont prévues pour l'échangeur (105), correspondant chacune à un cylindre respectif de la pluralité de cylindres.

8. Véhicule de type à selle selon l'une quelconque des revendications précédentes, **caractérisé en ce que**
le moteur (101) est un moteur installé de telle manière qu'un vilebrequin est perpendiculaire à une direction de déplacement (F) du véhicule, et **caractérisé en outre par**
un turbocompresseur (103) installé sur un côté du véhicule de manière adjacente à une culasse du moteur.

9. Véhicule de type à selle selon la revendication 8,
**caractérisé en ce que**
le moteur (101) comprend une pluralité de cylindres,
des conduites de gaz d'échappement provenant de la pluralité de cylindres sont réunies en une conduite de gaz d'échappement dans la culasse ou dans un collecteur attaché à la culasse, et
le turbocompresseur (103) est situé à une extrémité de la conduite de gaz d'échappement.

10. Véhicule de type à selle selon la revendication 8 ou 9, **caractérisé en ce que** le turbocompresseur (103) est installé de telle manière qu'un axe du turbocompresseur (103) est parallèle à la direction de déplacement (F) du véhicule et parallèle à une surface sur laquelle le véhicule se déplace.

11. Véhicule de type à selle selon l'une quelconque des revendications 8 à 10, **caractérisé en ce que**
le turbocompresseur (103) est installé de telle manière qu'un côté turbine (103a) du turbocompresseur (103) se situe dans une partie avant du véhicule et un côté compresseur (103b) du turbocompresseur se situe dans une partie arrière du véhicule.

12. Véhicule de type à selle selon l'une quelconque des revendications 8 à 11, **caractérisé en ce que**
le turbocompresseur (103) est installé à l'intérieur par rapport à un plan comprenant : une extrémité extérieure (A) d'un guidon (155) situé sur le même côté que le turbocompresseur (103) ; une extrémité extérieure (C) d'un carter de vilebrequin (157), un capot de protection du carter de vilebrequin (C) ou capot du moteur (D, 201a) ; et une extrémité extérieure d'un silencieux (115).

13. Véhicule de type à selle selon la revendication 12, **caractérisé en ce que** l'extrémité extérieure (A) du guidon (155) est l'extrémité extérieure (A) du guidon (155) située du même côté que le turbocompresseur (103) tourné vers l'intérieur.

14. Véhicule de type à selle selon l'une quelconque des revendications 8 à 13, **caractérisé en ce que**
le moteur (101) est un moteur multicylindre parallèle ou un moteur multicylindre en V.
